# EUROPÄISCHE PATENTANMELDUNG

(11) **EP 4 681 969 A1**
(43) Veröffentlichungstag der Anmeldung: **21.01.2026**
(21) Anmeldenummer: 25190287.0
(22) Anmeldetag: 17.07.2025
(51) Int. Cl.: B60L 7/00, B60L 15/20

(54) **BREMSVORRICHTUNG UND POSITIONSHALTEVERFAHREN**

(30) Priorität: 19.07.2024 LU 103340
(71) Anmelder: KB-Golf Flat Cat Nikolaus Berger, 82541 Münsing (DE)
(72) Erfinder: BERGER, Nikolaus, 82541 Münsing (DE)
(74) Vertreter: Paustian & Partner Patentanwälte mbB

(57) **Zusammenfassung**

Die Erfindung betrifft eine Trolleyfeststellbremsvorrichtung umfassend zumindest einen Elektromotor und einen mit dem Elektromotor wirkverbundenen Encoder. Weiterhin wird eine Steuerung und eine Temperaturüberwachung umfasst. Die Temperaturüberwachung und die Steuerung sind mit dem Elektromotor und Encoder wirkverbunden. Die Steuerung ist dazu vorgesehen und geeignet den Elektromotor vermittels des Encoders in einem gewünschten Positionsbereich zu halten. Die Temperaturüberwachung überwacht die Temperatur des Elektromotors. Weiterhin ist die Steuerung einer Trolleyfeststellbremsvorrichtung dazu vorgesehen und geeignet den Elektromotor kurzzuschließen.

## Beschreibung

Die vorliegende Erfindung bezieht sich auf eine Bremsvorrichtung und ein Positionshalteverfahren. Genauer bezieht sich die Bremsvorrichtung auf eine Trolleyfeststellbremsvorrichtung.

Trolleys im Sinne dieser Anmeldung sind handgeführte und/oder handgelenkte (angetriebene) mehrrädrige (z.B. 2 bis 4 Räder) Transportwägen. Ebenfalls eingeschlossen sind Trolleys mit Folgesystem, die einem Benutzer selbsttätig folgen bzw. vorausfahren.

Trolleybremssysteme im Stand der Technik sind zumeist kompliziert aufgebaut und erschweren die Konstruktion und Montage der Trolleys, an denen sie verbaut sind deutlich. Oftmals sind sie für einen Benutzer umständlich zu bedienen.

Die vorliegende Anmeldung hat es daher zur Aufgabe eine Trolleyfeststellbremsvorrichtung, einen Trolley und ein Positionshalteverfahren vorzuschlagen, mit dem das Halten bzw. Stehen an einer Position benutzerfreundlich und technisch einfach zu realisieren ist. Diese Aufgabe wird durch die beigefügten unabhängigen Ansprüche gelöst.

Nach einem Aspekt der vorliegenden Anmeldung umfasst eine Trolleyfeststellbremsvorrichtung zumindest einen Elektromotor und einen mit dem Elektromotor wirkverbundenen Encoder. Weiterhin wird eine Steuerung und eine Temperaturüberwachung umfasst. Die Temperaturüberwachung und die Steuerung sind mit dem Elektromotor und Encoder wirkverbunden. Die Steuerung ist dazu vorgesehen und geeignet den Elektromotor vermittels des Encoders in einem gewünschten Positionsbereich zu halten. Die Temperaturüberwachung überwacht die Temperatur des Elektromotors. Weiterhin ist die Steuerung einer Trolleyfeststellbremsvorrichtung dazu vorgesehen und geeignet den Elektromotor kurzzuschließen. Hierbei wird der Elektromotor bekanntermaßen gleichzeitig von einer Stromversorgung getrennt, sodass diese nicht von dem Kurzschluss betroffen ist. Dies kann den Vorteil haben, dass ein Positionsbereich durch die auftretende Selbsthemmung des Elektromotors gehalten werden kann, auch wenn der Elektromotor wegen Überhitzung abgeschaltet werden muss.

Durch äußere Einflüsse kann der Elektromotor aus einer bestimmten Position bewegt werden. Wenn z.B. ein Trolley, an dem die Trolleyfeststellbremsvorrichtung verbaut ist, an einem Hang steht, kann der mit einem Rad verbundene Elektromotor durch ein Wegrollen des Trolleys bedingt, aus einer gewünschten Position gebracht werden. Mit anderen Worten wird der Läufer des Elektromotors gedreht. Diese Drehung wird durch den Encoder erkannt und der Elektromotor wird vermittels der Steuerung entgegen der Drehrichtung des äußeren Einflusses (z.B. Wegrollen) gedreht, um die von außen einwirkende Drehung zu kompensieren. Dabei kann der ursprüngliche Startpunkt der Drehung oft nicht genau durch den Motor angefahren werden und wenn weiterhin eine Kraft (z.B. Hangabtriebskraft) wirkt wird der Elektromotor fortwährend durch äußeren Einfluss, Encoder und Steuerung in kleinen Drehbewegungen ggf. in beiden Drehrichtungen gedreht, um eine gewünschte Position annähernd zu halten. Durch das Übersteuern bzw. Überdrehen bezogen auf die initiale und gewünschte Position ergibt sich ein Positionsbereich um die initiale Position, in dem der Elektromotor bzw. dessen Läufer gehalten wird.

Durch das fortwährende Ansteuern des Elektromotors, kann sich dieser stark erwärmen. Eine zu starke Erwärmung kann dazu führen, dass eines von Elektromotor, Encoder oder Steuerung ausfällt. Dies kann zu einer gefährlichen Situation führen, da im Falle des voran genannten Beispiels eines an einem Hang stehenden Trolleys ein Ausfall einer der voran genannten Komponenten dazu führen kann, dass der Trolley den Hang unkontrolliert hinunterrollt. Eine Überhitzung wird durch das Stromlosschalten und Kurzschließen bei Erreichen einer Grenztemperatur verhindert. Dies kann den Vorteil haben, dass eine technisch einfach zu realisierende Trolleyfeststellbremsvorrichtung erlangt werden kann, die zuverlässig funktioniert.

Nach einem Aspekt der vorliegenden Anmeldung gibt bei einer Trolleyfeststellbremsvorrichtung die Steuerung bei Erreichen der Grenztemperatur ein erstes Signal aus. Dies kann den Vorteil haben, dass weitere Einrichtungen angesteuert werden können.

Nach einem Aspekt der vorliegenden Anmeldung umfasst eine Trolleyfeststellbremsvorrichtung weiterhin eine Alternativbremsvorrichtung. Die Alternativbremsvorrichtung kann als Folge des ersten Signals aktiviert werden. Die Aktivierung kann auch manuell durch einen Benutzer des Trolleys erfolgen. Die Alternativbremsvorrichtung kann eine im Stand der Technik bekannte Bremsvorrichtung, wie z.B. eine Reibungsbremsvorrichtung sein. Dies kann den Vorteil haben, dass eine zusätzliche Sicherheit geschaffen wird.

Nach einem Aspekt der vorliegenden Anmeldung umfasst das erste Signal einer Trolleyfeststellbremsvorrichtung zumindest eines von einem Steuersignal, einem akustischen Signal, einem optischen Signal. Dies kann den Vorteil haben, dass die Information bzgl. der Grenztemperatur wie gewünscht und/oder benötigt kommuniziert werden kann.

Nach einem Aspekt der vorliegenden Anmeldung aktiviert bei einer Trolleyfeststellbremsvorrichtung das Steuersignal die Alternativbremsvorrichtung. Dies kann den Vorteil haben, dass ohne Zutun eines Benutzers die Alternativbremsvorrichtung aktiviert werden kann.

Nach einem Aspekt der vorliegenden Anmeldung umfasst die Steuerung bei einer Trolleyfeststellbremsvorrichtung ein Relais. Das Relais kann den Elektromotor mit einer Stromversorgung verbinden. Weiterhin kann das Relais den Elektromotor kurzschließen. Dies kann den Vorteil haben, dass die Steuerung kostengünstig gebaut werden kann.

Nach einem Aspekt der vorliegenden Anmeldung wir die Alternativbremsvorrichtung einer Trolleyfeststellbremsvorrichtung manuell betätigt. Dies kann den Vorteil haben, dass die Komplexität der Vorrichtung reduziert werden kann.

Nach einem Aspekt der vorliegenden Anmeldung ist das Steuersignal einer Trolleyfeststellbremsvorrichtung dazu vorgesehen und geeignet auf ein mobiles Anzeigegerät übertragen zu werden. Dies kann zum Beispiel ein Mobiltelefon sein und die Übertragung kann mit jeder geeigneten Drahtlos-Technologie erfolgen. Damit kann ein Benutzer die Benachrichtigung direkt und einfach erhalten, dass die Grenztemperatur und/oder gewählte weitere Temperaturen erreicht sind. Dies kann den Vorteil haben, dass die Benutzerfreundlichkeit und Sicherheit gesteigert werden können.

Nach einem Aspekt der vorliegenden Anmeldung umfasst ein Trolley eine Trolleyfeststellbremsvorrichtung nach einem der oben genannten Aspekte und zumindest ein Rad. Dabei wirkt der Elektromotor auf zumindest ein Rad des Trolleys. Die Trolleyfeststellbremsvorrichtung ist dazu vorgesehen und geeignet das Rad in einer bestimmten Lage zu halten. Durch die Massenträgheit des Trolleys und des Rades, sowie weiterer Verluste bzw. Einflüsse (z.B. Schlupf des Rades) reduziert sich auf den Trolley betrachtet der oben genannte Positionsbereich auf eine Position des Rades. Es kann aber auch beim Trolley ein Positionsbereich sein, wenn z.B. der Encoder eine grobe Auflösung bzw. Detektionsgenauigkeit aufweist. Dies kann den Vorteil haben, dass ein Trolley erhalten wird, der für einen Benutzer einfach und sicher zu handhaben ist.

Nach einem Aspekt der vorliegenden Anmeldung umfasst ein Positionshalteverfahren die folgenden Schritte:
- Halten eines Elektromotors in einem gewählten Positionsbereich vermittels eines mit dem Elektromotor verbundenen Encoders (siehe oben);
- Fortwährendes überwachen einer Temperatur des Elektromotors (siehe oben);
- Bei Erreichen einer Grenztemperatur, Trennen von der Stromversorgung und Kurzschließen des Elektromotors (siehe oben).

Das Verfahren kann den vorangehenden Schritt umfassen, dass ein Positionshalteverfahren aktiviert wird.

Nach einem Aspekt der vorliegenden Anmeldung umfasst ein Positionshalteverfahren das Ausgeben eines ersten Signals bei Erreichen der Grenztemperatur. Dies kann den Vorteil haben, dass weitere Einrichtungen angesteuert werden können.

Nach einem Aspekt der vorliegenden Anmeldung umfasst ein Positionshalteverfahren das Aktivieren einer Alternativbremsvorrichtung vermittels des ersten Signals. Die Aktivierung kann manuell durch einen Benutzer erfolgen. Dies kann den Vorteil haben, dass die Sicherheit des Verfahrens gesteigert wird.

Nach einem Aspekt der vorliegenden Anmeldung umfasst bei einem Positionshalteverfahren das Ausgeben eines Signals zumindest eines von Ausgeben eines Steuersignals, Ausgeben eines akustischen Signals, Ausgeben eines optischen Signals. Dies kann den Vorteil haben, dass die Information bzgl. der Grenztemperatur wie gewünscht und/oder benötigt kommuniziert werden kann.

Nach einem Aspekt der vorliegenden Anmeldung aktiviert bei einem Positionshalteverfahren das Steuersignal eine Alternativbremsvorrichtung. Dies kann den Vorteil haben, dass ohne Zutun eines Benutzers die Alternativbremsvorrichtung aktiviert werden kann.

Nach einem Aspekt der vorliegenden Anmeldung umfasst ein Positionshalteverfahren weiterhin umfassend den Schritt des Ausgebens eines zweiten Signals beim Erreichen einer Benachrichtigungstemperatur. Die Benachrichtigungstemperatur kann eine Temperatur sein, die niedriger ist als die Grenztemperatur. Wenn die Alternativbremsvorrichtung manuell aktiviert wird, kann dies von Vorteil sein, um den Benutzer zu informieren, dass demnächst die Grenztemperatur erreicht wird. Weiterhin kann das zweite Signal eine Prognose umfassen, in welcher Zeit die Grenztemperatur erreicht werden wird, basierend auf den bis zu diesem Zeitpunkt gesammelten Daten über die Erwärmung des Elektromotors. Das zweite Signal kann ebenfalls eines umfassen von Ausgeben eines akustischen Signals, Ausgeben eines optischen Signals, Ausgeben eines Steuersignals. Damit kann das zweite Signal ebenfalls auf ein mobiles Anzeigegerät wie z.B. ein Mobiltelefon (siehe oben) übertragen werden. Dies kann den Vorteil haben, dass die Bedienfreundlichkeit für einen Benutzer erhöht wird.

Zum besseren Verständnis der Erfindung wird diese anhand der nachfolgenden Figuren näher erläutert. Es zeigen jeweils in stark vereinfachter, schematischer Darstellung:
Fig. 1 ein Funktionsschema einer Trolleyfeststellbremsvorrichtung bzw. eines Trolleys gemäß einer Ausführungsform.
Fig. 2 ein Ablaufdiagramm eines Positionshalteverfahrens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf (funktions-)gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich, links, rechts usw. auf die unmittelbar beschriebene sowie dargestellte Figur bezogen bzw. auf einen Trolley auf einer horizontalen Ebene stehend und sind diese Lageangaben bei einer Lageänderung sinngemäß auf die neue Lage zu übertragen.

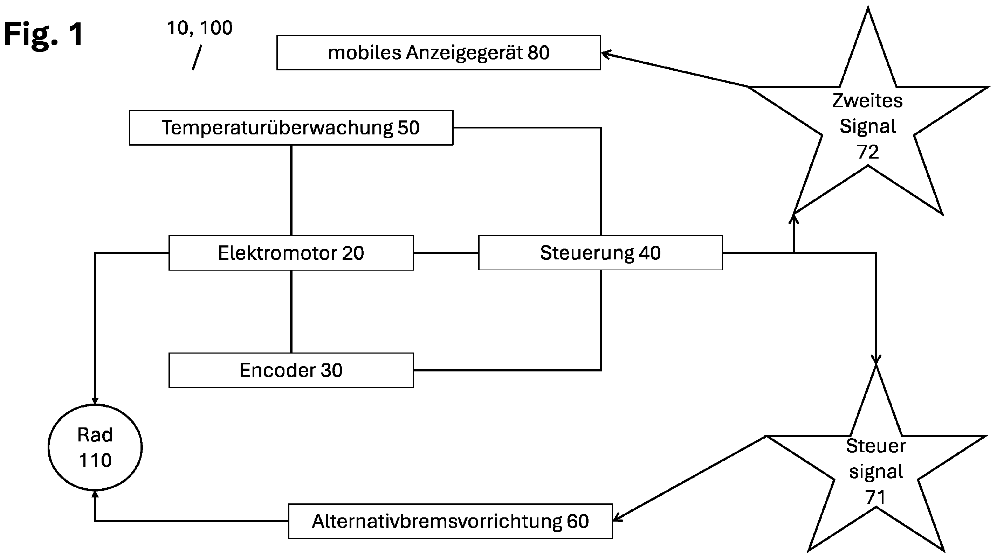

Anfänglich wird Bezug genommen auf Fig. 1, welche ein Funktionsdiagramm einer Trolleyfeststellbremsvorrichtung 10 bzw. eines Trolleys 100 (nicht gezeigt) mit einer Trolleyfeststellbremsvorrichtung 10 darstellt. Eine Steuerung 40 ist mit einem Elektromotor 20, einer Temperaturüberwachung 50 und einem Encoder 30 verbunden. Die Temperaturüberwachung 50 und der Encoder 30 sind mit dem Elektromotor 20 verbunden. Der Encoder 30 detektiert Drehbewegungen des Elektromotors 20 und die Temperaturüberwachung 50 überwacht die Temperatur des Elektromotors 20 (und ggf. die des Encoders 30 und/oder der Steuerung 40). Der Elektromotor 20 wirkt auf ein Rad 110 des Trolleys 100. Eine Alternativbremsvorrichtung 60 wirkt ebenfalls auf das Rad 110. Der Elektromotor 20 und die Alternativbremsvorrichtung 60 können auf unterschiedliche Räder des Trolleys 100 wirken. Die Alternativbremsvorrichtung 60 kann jede geeignete Art von Bremsvorrichtung sein, z.B. eine Reibungsbremsvorrichtung. Vermittels der Steuerung 40 und dem Encoder 30 kann der Elektromotor 20 wie oben beschrieben in einem Positionsbereich oder das Rad 110, an welches der Elektromotor 20 montiert ist, in einer Position gehalten werden.

Die Steuerung 40 gibt ein erstes Signal 70 bzw. hier ein Steuersignal 71 aus, wenn die Temperaturüberwachung 50 das Erreichen einer Grenztemperatur detektiert. Die Steuerung 40 gibt ein zweites Signal 72 aus, wenn die Temperaturüberwachung 50 das Erreichen einer Benachrichtigungstemperatur detektiert. Die Benachrichtigungstemperatur kann niedriger sein als die Grenztemperatur. Das Steuersignal 71 aktiviert die Alternativbremsvorrichtung 60 und weiterhin wird der Elektromotor 20 vermittels eines Relais 41 von einer Stromversorgung (nicht gezeigt und optional) getrennt und kurzgeschlossen. Das zweite Signal 72 kann ein Drahtlossignal sein, welches auf einem mobilen Anzeigegerät 80 ausgegeben wird. Dies kann eine Benachrichtigung auf z.B. einem Mobiltelefon sein. Die Steuerung 40 kann basierend auf den bis zu diesem Zeitpunkt gesammelten Temperaturverläufen eine Zeitspanne errechnen und mit dem zweiten Signal 72 ausgeben, wann die Grenztemperatur voraussichtlich erreicht wird, wenn die Benachrichtigungstemperatur niedriger ist als die Grenztemperatur. Die Ausgabe des zweiten Signals 72 ist optional.

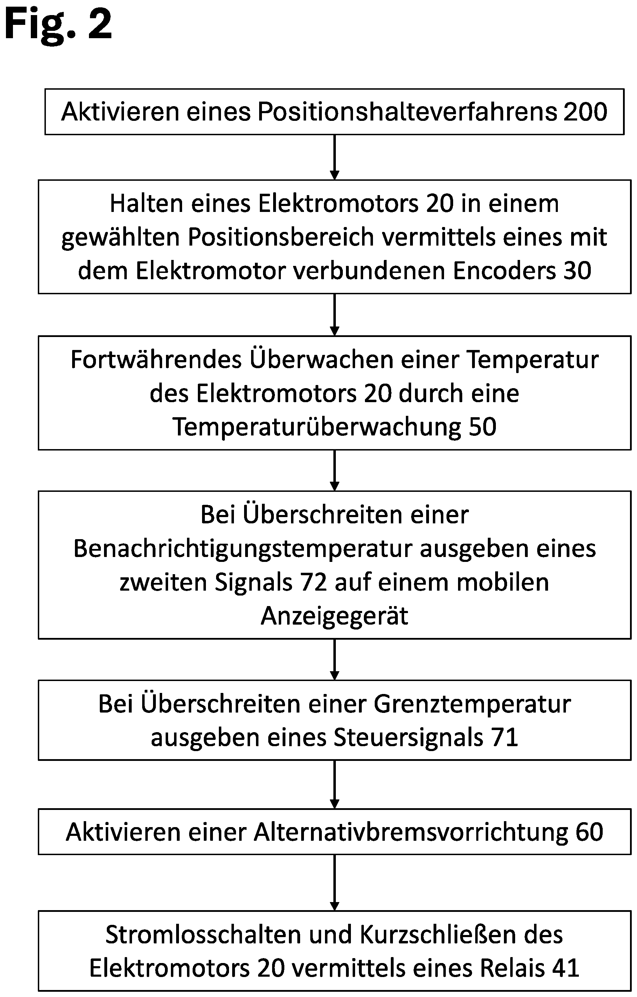

In Fig. 2 wird ein Ablaufdiagramm eines beispielhaften Positionshalteverfahren 200 dargestellt. In einem ersten Schritt wird ein Positionshalteverfahren aktiviert. In einem folgenden Schritt wird ein Elektromotor 20 in einem gewählten Positionsbereich vermittels eines mit dem Elektromotor 20 verbundenen Encoders 30 gehalten (siehe oben). Eine Temperatur des Elektromotors 20 (und ggf. die des Encoders 30 und/oder der Steuerung 40) wird fortwährend durch eine Temperaturüberwachung 50 überwacht. In einem folgenden Schritt wird bei Erreichen einer Benachrichtigungstemperatur durch die Steuerung 40 ein zweites Signal 72 auf einem mobilen Anzeigegerät z.B. einem Mobiltelefon ausgegeben (siehe oben). In einem folgenden Schritt wird bei Erreichen einer Grenztemperatur ein Steuersignal 71 durch die Steuerung 40 ausgegeben. Das Steuersignal 71 aktiviert eine Alternativbremsvorrichtung 60. Die Steuerung 40 schaltet danach oder gleichzeitig den Elektromotor 20 vermittels eines Relais 41 stromlos und schließt den Elektromotor 20 kurz. Die Verwendung des Relais 41 ist optional.

Die Ausführungsbeispiele zeigen mögliche Ausführungsvarianten, wobei an dieser Stelle bemerkt sei, dass die Erfindung nicht auf die speziell dargestellten Ausführungsvarianten der-selben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Die Verfahrensschritte des Positionshalteverfahrens werden auch (zum Teil detaillierter) in der Vorrichtungsbeschreibung gegeben und umgekehrt.

Der Schutzbereich ist durch die Ansprüche bestimmt. Die Beschreibung und die Zeichnungen sind jedoch zur Auslegung der Ansprüche heranzuziehen. Einzelmerkmale oder Merkmals-kombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Ordnungszahlen wie erster, zweiter, usw. sind lediglich zur Unterscheidung voneinander gegeben und haben keine Ursache in einer Priorisierung oder Ablauffolge. Das Vorhandensein einer dieser Ordnungszahlen bedeutet nicht, dass ein weiterer damit bezeichneter Begriff vorhanden ist. So bedeutet z.B. ein erstes Signal nicht, dass es ein zweites Signal geben muss. Dies gilt für alle anderen mit Ordnungszahlen bezeichneten Begriffe ebenso.

Der Ordnung halber sei abschließend darauf hingewiesen, dass zum besseren Verständnis des Aufbaus Elemente teilweise unmaßstäblich und/oder vergrößert und/oder verkleinert dargestellt wurden und Größenbeziehungen nur dann aus den Figuren abgeleitet werden können, wenn dies ausdrücklich angegeben ist. Die Verfahrensschritte bzw. einzelne Merkmale daraus können in die Offenbarung der Vorrichtung übernommen werden und umgekehrt.

### Bezugszeichenliste

- 10: Trolleyfeststellbremsvorrichtung
- 20: Elektromotor
- 30: Encoder
- 40: Steuerung
- 41: Relais
- 50: Temperaturüberwachung
- 60: Alternativbremsvorrichtung
- 70: erstes Signal
- 71: Steuersignal
- 72: zweites Signal
- 80: mobiles Anzeigegerät
- 100: Trolley
- 110: Rad
- 200: Positionshalteverfahren

## Patentansprüche

1. Trolleyfeststellbremsvorrichtung (10) umfassend zumindest einen Elektromotor (20), einen mit dem Elektromotor wirkverbundenen Encoder (30), eine Steuerung (40) und eine Temperaturüberwachung (50), wobei die Temperaturüberwachung und die Steuerung mit dem Elektromotor und Encoder wirkverbunden sind, und wobei die Steuerung dazu vorgesehen und geeignet ist den Elektromotor vermittels des Encoders in einem gewünschten Positionsbereich zu halten, und wobei die Temperaturüberwachung die Temperatur des Elektromotors überwacht, und wobei die Steuerung bei Erreichen einer Grenztemperatur dazu vorgesehen und geeignet ist den Elektromotor stromlos- und kurzzuschließen.

2. Trolleyfeststellbremsvorrichtung (10) nach Anspruch 1, wobei die Steuerung (40) ein erstes Signal (70) bei Erreichen der Grenztemperatur ausgibt.

3. Trolleyfeststellbremsvorrichtung (10) nach Anspruch 1 oder 2, weiterhin umfassend eine Alternativbremsvorrichtung (60).

4. Trolleyfeststellbremsvorrichtung (10) nach Anspruch 2 oder 3, wobei das erste Signal (70) zumindest eines umfasst von einem Steuersignal (71), einem akustischen Signal, einem optischen Signal.

5. Trolleyfeststellbremsvorrichtung (10) nach Anspruch 4, wobei das Steuersignal (71) die Alternativbremsvorrichtung (60) aktiviert.

6. Trolleyfeststellbremsvorrichtung (10) nach einem der vorangegangenen Ansprüche, wobei die Steuerung (40) ein Relais (41) umfasst.

7. Trolleyfeststellbremsvorrichtung (10) nach einem der Ansprüche 3 bis 6, wobei die Alternativbremsvorrichtung (40) manuell betätigt wird.

8. Trolleyfeststellbremsvorrichtung (10) nach einem der Ansprüche 4 bis 7, wobei das Steuersignal (71) dazu vorgesehen und geeignet ist auf ein mobiles Anzeigegerät (80) übertragen zu werden.

9. Trolley (100), umfassend eine Trolleyfeststellbremsvorrichtung (10) nach einem der vorangegangenen Ansprüche und zumindest ein Rad (110), wobei der Elektromotor (20) auf zumindest ein Rad des Trolleys wirkt, und wobei die Trolleyfeststellbremsvorrichtung dazu vorgesehen und geeignet ist das Rad in einer bestimmten Lage zu halten.

10. Positionshalteverfahren (200) umfassend die folgenden Schritte:
- Halten eines Elektromotors (20) in einem gewählten Positionsbereich vermittels eines mit dem Elektromotor verbundenen Encoders (30);
- Fortwährendes überwachen einer Temperatur des Elektromotors;
- Bei Erreichen einer Grenztemperatur, Trennen von der Stromversorgung und Kurzschließen des Elektromotors (20).

11. Positionshalteverfahren (200) nach Anspruch 10, wobei die Steuerung (40) bei Erreichen der Grenztemperatur ein erstes Signal (70) ausgibt.

12. Positionshalteverfahren (200) nach Anspruch 10 oder 11, wobei das Ausgeben eines Signals zumindest eines umfasst von Ausgeben eines Steuersignals (71), Ausgeben eines akustischen Signals, Ausgeben eines optischen Signals.

13. Positionshalteverfahren (200) nach Anspruch 11, wobei auf das erste Signal (70) hin eine Alternativbremsvorrichtung (60) aktiviert wird.

14. Positionshalteverfahren (200) nach einem der Ansprüche 10 bis 13, weiterhin umfassend den Schritt des Ausgebens eines zweiten Signals (72) beim Erreichen einer Benachrichtigungstemperatur.
